# EUROPEAN PATENT APPLICATION

(11) **EP 2 283 986 A2**
(43) Date of publication of application: **16.02.2011**
(21) Application number: 09169206.1
(22) Date of filing: 02.09.2009
(51) Int. Cl.: B28B 7/36, B29C 67/24

(54) **Method of manufacturing a textured composite stone plate**

(30) Priority: 13.08.2009 TR 200906284
(71) Applicant: Selcuk Iplik San Ve Tic AS, Gazintep (TR)
(72) Inventor: Kara, Bilal, Gaziantep (TR); Sahin, Mesut, Gaziantep (TR)
(74) Representative: Sevinç, Cenk

(57) **Abstract**

The present invention relates to a method of manufacturing a textured or figured, opaque or shiny composite natural stone plate to be used in the inner and outer surface coatings of the buildings, floors and walls; the surface of the stone is either coated or impregnated with polyethylene, polypropylene, natural oils or silicon; wherein the method of manufacturing involves the use of release paper that is textured with emboss or other techniques.

## Description

### Technical Field

The present invention relates to the method of manufacturing a textured composite natural stone plate which is to be used in interior and exterior surface coatings, floors and walls; involving treating the natural stone powder and dimensioned natural stone with polyester and epoxy binders.

### State of the Art

It is known from the prior art that; for the purpose of application to the interior and exterior surface coatings of the buildings, floor mats and the walls, the textured stone is manufactured by blending the natural stone powder, dimensioned natural stone particles with various resins and molding thereof. The texturing process of stone plates with molding necessitates additional time consuming and costly procedures like pressing and vacuum pumping. Use of mold is a must in the prior art if surface texturing is required, and it is possible to texture one side of the plate only.

### Object of the Invention

The object of the present invention is to provide a method of manufacturing a textured or figured, opaque or shiny composite natural stone plate to be used in interior and exterior surface coatings, floors and walls; the surface of the stone is either coated or impregnated with polyethylene, polypropylene, natural oils or silicon; wherein the method of manufacturing involves the use of release paper that is textured with emboss or other techniques.

Another object of the invention is to provide a natural composite stone plate with desirable figure and texture which is manufactured by continuous process over a belt conveyor, by reducing the cost and the production time in comparison to the molding technique.

Another object of the invention is to provide stone plates the dimensions of which are able to be manufactured desirably and much larger than those of the known art, by using textured and figured paper.

### Detailed Description of the Invention

The present invention relates to manufacturing of figured and textured natural composite stone plates that are to be used in interior and exterior surface coatings, floor mats and walls; the silicon, polyethylene, polypropylene surface of which is figured and textured by emboss technique by using release paper method.

In the composite stone manufacturing process with release paper according to the invention; the manufacturing process is started after choosing the suitable resin up to the type of manufacturing. The type of resin shows variety up to the usage area of the composite stone, marble, granite. Epoxy resin is used in the dynamic places; whereas it could be chosen as polyester, acrylic or polyurethane especially in floor mats and walls. These resins are supposed to be in suitable viscosity in order to provide the appropriate dispersion on the release paper. Surface disorders occur when the resins with unsuitable viscosity are used or dispersing agents are not used; therefore the receipts of the resins vary according to the viscosity and amount of dispersing agent.

The shininess or opaqueness of the natural composite stone, marble or granite is provided by the shiny or opaque characteristic of the release paper which is used in the process.

Release paper is spread over a flat surface; epoxy, acrylic, polyurethane resins in desired thickness are applied thereto to form the skin which is the upper layer and obtain the figure clearly from the paper. This skin layer might be pure resin or a blend of micronized natural stone powder and resin as well. Dimensioned stone, marble, granite blended with epoxy is spread over the skin layer homogenously in desirable thickness via knife or spray method. Curing process is performed optionally as natural curing or stoving at variable temperatures according to the type of the resin used. According to the curing period, textured and figured composite natural stone is produced; the surface of which looks like the textured surface of the leather or artificial leather coating. Release paper is removed from the surface of the stone plate, after the complete drying is obtained by the curing process. The figure/texture of the paper will have been transferred to the stone plate surface completely.

According to the inventive technique, a stone plate with real leather surface appearance could be obtained. That is to say, a marble with leather appearance could be obtained without applying a leather or artificial leather coating. A leather appearance is obtained at the surface; but the product exhibits superior durability of the stone.

There doesn't exist a release paper application in composite granite or marble state of art manufacturing processes. According to the type of paper used; opaque or shiny, figured and textured surfaces are obtained on the marble. By means of the technique according to the invention, pressing and vacuuming processes are not needed in texturing the surface of the skin of the composite material. In the compression process of the composite material that contributes thickness to the stone, pressing and vacuuming can be used optionally.

Achievement of a similar decorative surface by molding, when compared to the production of composite stone, marble, granite with release paper, is incomparably expensive on the basis of time and application cost. Pressing, vacuuming and labor force are among the factors that increase the cost of molding technique.

The release paper process according to the present invention reduces the molding cost and the production time at the same time. The final decorative structure obtained does not show any similarity with the ones obtained by the known methods.

## Claims

1. A method of manufacturing a textured and figured composite natural stone, **characterized in** comprising the steps below;
- the release paper is spread over a flat surface,
- the skin layer comprising epoxy, acrylic, polyurethane resins is applied over the release paper,
- a mixture is formed by blending the epoxy and natural stone powder and dimensioned stone particles,
- the said mixture is spread over the release paper homogenously,
- curing process is applied,
- the release paper is removed from the surface of the stone plate after the curing process.

2. A method of manufacturing a composite natural stone according to the claim 1, **characterized in that**; the release paper used in the process is opaque or shiny.

3. A method of manufacturing a composite natural stone according to the claims 1 and 2, **characterized in that**; the skin layer used in the process is obtained by blending the micronized natural stone powder and resins.

4. A method of manufacturing a composite natural stone according to the claims 1 to 3, **characterized in that**; the natural stone powder and natural stone particles are composite stone, marble and granite.

5. A method of manufacturing a composite natural stone according to the claims 1 to 4, **characterized in that**; the curing process is carried out naturally in chambers or by stoving.

6. A figured and textured composite natural stone obtained according to the claims 1 to 5.
